# EUROPEAN PATENT APPLICATION

(11) **EP 3 396 903 A1**
(43) Date of publication of application: **31.10.2018**
(21) Application number: 17168769.2
(22) Date of filing: 28.04.2017
(51) Int. Cl.: H04L 12/58

(54) **TECHNIQUES FOR PROVIDING REACHABILITY STATUS IN A COMMUNICATION NETWORK**

(71) Applicant: Deutsche Telekom AG, 53113 Bonn (DE); Technische Universität Berlin, 10625 Berlin (DE)
(72) Inventor: Stepanek, Nicolas Walter, 64385 Reichelsheim (DE); Pavenstedt, Maike, 12053 Berlin (DE); Hillmann, Uwe, 10247 Berlin (DE)
(74) Representative: Patentship Patentanwaltsgesellschaft mbH

(57) **Abstract**

The disclosure relates to an application server (210) for providing a reachability status of a second communication device (2120) to a first communication device (110), the application server (210) comprising: a client interface (311) with a first communication device (110); a network interface (312) with a communication network (220); a processor (313), configured to: receive a client request (301) for a reachability status of a second communication device (120) via the client interface (311), transmit a network request (302) for at least one of subscriber data (303) and device data (304) of the second communication device (120) via the network interface (312) based on the client request (301), receive a network response (305) to the network request (302), wherein the network response (302) comprises the at least one of subscriber data (303) and device data (304) of the second communication device (120), determine a reachability status (306) of the second communication device (120) based on a metric with respect to the at least one of subscriber data (303) and device data (304) of the second communication device (120), and transmit the reachability status (306) of the second communication device (120) via the client interface (311) to the first communication device (110).

## Description

### TECHNICAL FIELD

The present disclosure relates to techniques for providing a reachability status of a second communication device, i.e. B-Party, to a first communication device, i.e. A-Party, in a communication network, IP based messaging orAR/VR (augmented reality/virtual reality) services. In particular, the disclosure relates to a system and method for displaying reachability in call logs.

### BACKGROUND

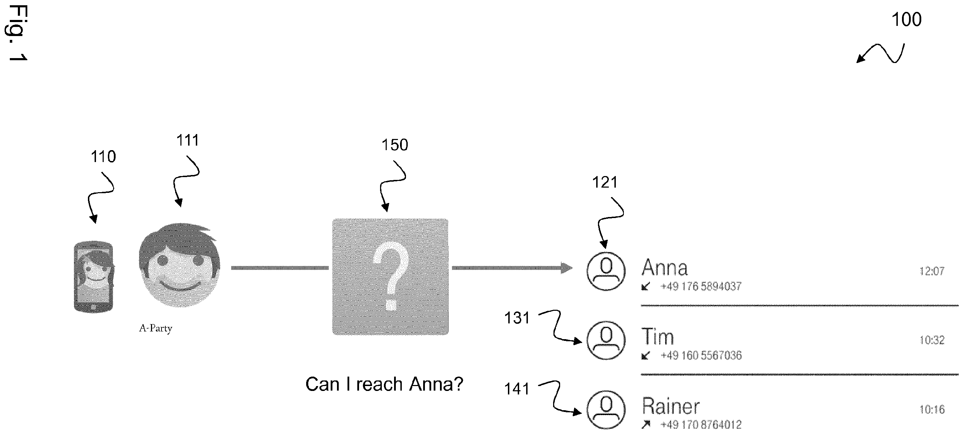

Fig. 1 shows a schematic diagram illustrating a communication system 100 where a first user (A-Party) 111 has a first communication device 110, e.g. a smartphone for calling any second user (B-Party), e.g. Anna 121, Tim 131 or Rainer 141 over the communication system 100. Before calling any second user, the first user 111 wants to know 150 when he can reach Anna 121 for example (i.e. the B-Party) by phone. Otherwise he might switch to another communication channel or wait for a better reachability. On the other hand, the first user (A-Party) 111 would call Anna 121 if he knows that he can reach her. In current communication systems the A-Party 111 has to try by trial and error if he can reach the B-Party 121. The information about the reachability of the B-Party is given at the moment the connection is established (free, busy or voicemail) and not before. The problem of low batteries or bad network connection will determine the experience during the call.

### SUMMARY

It is the object of the invention to provide a concept for providing reachability information about the B-Party to the A-Party before call establishment.

This object is achieved by the features of the independent claims. Further implementation forms are apparent from the dependent claims, the description and the figures.

In order to describe the invention in detail, the following terms, abbreviations and notations will be used:
- 5G:: fifth generation mobile network
- LTE:: Long Term Evolution
- BS:: Base Station, eNodeB
- RF:: radio frequency
- AR:: augmented reality
- VR:: virtual reality

According to a first aspect, the invention relates to an application server for providing a reachability status of a second communication device to a first communication device, the application server comprising: a client interface with a first communication device; a network interface with a communication network; a processor, configured to: receive a client request for a reachability status of a second communication device via the client interface, transmit a network request for at least one of subscriber data and device data of the second communication device via the network interface based on the client request, receive a network response to the network request, wherein the network response comprises the at least one of subscriber data and device data of the second communication device, determine a reachability status of the second communication device based on a metric with respect to the at least one of subscriber data and device data of the second communication device, and transmit the reachability status of the second communication device via the client interface to the first communication device.

Such an application server provides a solution to the A-party's demand: "I would like to know before a phone call whether I actually reach someone, if I call this person, that is, whether a conversation is possible at all." Using this application server, the A-subscriber knows now before the call has been established, whether the caller is currently available. The A-subscriber does not need to listen to the dial tone or listen to the busy signal, or listen to the message on the voicebox of the B-subsriber. Instead, the A-subscriber can see by a simple symbol of his display if the B-subscriber is reachable. Furthermore, it is possible to know before the call set-up whether the available network quality of the B-subscriber is sufficient for a call.

In an implementation form of the application server the processor is configured to determine the reachability status of the second communication device before establishing a communication to the second communication device.

The application server enables the A-subscriber to obtain appropriate information even before the call and thus solves an existing telephony client problem and increases the effectiveness of the personal communication on the user side.

In an implementation form of the application server the reachability status indicates a probability for a successful connection establishment with the second communication device.

This provides the advantage that a high probability value indicates a successful call establishment while a low probability value can indicate that it would be better not to inititate a telephone call and either to wait for a higher probability value or to use an email or another text message to contact the B-Party.

In an implementation form of the application server the subscriber data of the second communication device comprises information elements of at least one of the following items: device is registered in the communication network, device is not busy, voicemail is switched off, no other call forwarding activated.

This provides the advantage that specific rules can be set exploiting these data. The rule set or metric may be for example as follows: If device is registered, not busy, voicemail is switched off and no call forwardings switched on, reachability of B-Party device is good, otherwise not good. The metric can use such rules to determine the reachability status of the second communication device.

In an implementation form of the application server the device data of the second communication device comprises information elements of at least one of the following items: device is not muted, battery load is above a predefined level.

This provides the advantage that specific rules can be set exploiting these data. The rule set or metric may be for example as follows: If device is not muted and battery load is above the predefined level, e.g. 10 or 20 percent of full battery load, reachability of B-Party device is good, otherwise not good. The metric can use such rules to determine the reachability status of the second communication device.

In an implementation form of the application server the processor is configured to determine the metric based on weighting information elements comprised in the subscriber data and information elements comprised in the device data.

This provides the advantage that the metric can be optimally set, e.g. by using information about battery condition of multiple user devices or information from the field about user subscription.

In an implementation form of the application server the processor is configured to determine a call quality for a communication connection to the second communication device over at least one communication channel and to determine the metric further based on the call quality.

This provides the advantage that the reachability status indicates that a good call quality can be expected.

In an implementation form of the application server the processor is configured to determine the call quality based on at least one of an audio or video communication channel.

This provides the advantage that both audio and video telephony reachability status can be indicated to the A-Party.

In an implementation form of the application server the processor is configured to determine the reachability status based on a mapping of the metric to a probability value.

This provides the advantage that the A-Party receives quantitative information, e.g. a value between zero and one, about the reachability of the B-Party and can decide on which probability value to initiate a communication to the B-Party.

In an implementation form the application server comprises: a memory configured to store user preference data and/or behavioural data settable by a user of the second communication device, wherein the preference data indicates a preferred connection to reach the user and the behavioural data indicates data the user has agreed to collect.

This provides the advantage that privacy of the B-Party is better protected.

In an implementation form of the application server the processor is configured to determine the metric based on the preference data and/or the behavioural data stored in the memory.

This provides the advantage that privacy restrictions of the B-Party can be considered for indicating its availability.

According to a second aspect, the invention relates to a first communication device providing a reachability status of at least one second communication device, the first communication device comprising: a client interface with an application server, in particular an application server according to the first aspect; a display for displaying a reachability status of at least one second communication device; and a processor, configured to: transmit a client request for a reachability status of the at least one second communication device via the client interface to the application server, receive a server response to the client request, wherein the server response comprises a reachability status of the at least one second communication device based on a metric with respect to at least one of subscriber data and device data of the at least one second communication device, and display the reachability status of the at least one second communication device on the display.

Such a communication device allows the caller / A-subscriber to receive information on the technical availability of the B-subscriber before the call. I.e. the caller is informed about the B-subscriber's ability to reach the B-subscriber from a technical point of view. The communication device makes it possible to have an indication on the availability of the B-subscribers before the connection has been established. Inadequate voice quality or other problems such as empty batteries in wireless devices are indicated within the reachability status to the A-subscriber. Accessibility can be controlled by an application server of the communication network even without applying special features such as so-called voice performance features in the circuit-switched communication.

In an implementation form of the first communication device the processor is configured to establish a communication to the at least one second communication device based on the reachability status of the at least one second communication device.

The communication device enables the A-subscriber to obtain appropriate information even before the call and thus solves an existing telephony client problem and increases the effectiveness of the personal communication on the user side.

In an implementation form the first communication device comprises: a memory storing a list of contact persons, wherein each contact person from the list is associated with a respective subscriber identity (ID) of a second communication device of the at least one second communication devices, wherein the processor is configured to display the reachability status together with the respective aubscriber ID of the contact person associated with the at least one second communication device.

This provides the advantage that the user can easily check which one of the contact persons from his call log or address book is currently available for establishing a call.

According to a third aspect, the invention relates to a method for providing a reachability status of a second communication device to a first communication device, the method comprising: receiving a client request for a reachability status of a second communication device from a first communication device; transmitting a network request for at least one of subscriber data and device data of the second communication device to a communication network based on the client request; receiving a network response to the network request from the communication network, wherein the network response comprises the at least one of subscriber data and device data of the second communication device; determining a reachability status of the second communication device based on a metric with respect to the at least one of subscriber data and device data of the second communication device; and transmitting the reachability status of the second communication device to the first communication device.

The method can facilitate more and better telephony, since the availability of the desired conversation partner is transparent to the A-Party. Thus, the A-Party can directly call the B-Party instead of using e.g. asynchronous IP messaging. Telephony is easy to use; no other communication channels need to be chosen. The method enables the A-subscriber to obtain appropriate information even before the call and thus solves an existing telephony client problem and increases the effectiveness of the personal communication on the user side. The advantage of the method lies, on the one hand, in the user's time saving, a more positive perception of the telephone service and a more exact expectation during the connection setup.

### BRIEF DESCRIPTION OF THE DRAWINGS

Further embodiments of the invention will be described with respect to the following figures, in which:
Fig. 1 shows a schematic diagram illustrating a communication system 100.
Fig. 2 shows a schematic diagram illustrating a communication system 200 with an application server including a reachability system according to the disclosure.
Fig. 3 shows a schematic diagram illustrating message flows in a communication system 300 with application server providing reachability status of Client B according to an implementation form.
Fig. 4 shows a schematic diagram illustrating a communication device 110 providing a reachability status for multiple contact persons according to an implementation form.
Fig. 5 shows a schematic diagram illustrating a method 500 for providing a reachability status of a second communication device to a first communication device according to an implementation form.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The communication systems as described hereinafter may include a plurality of different network entities or network nodes. A network entity or a network node may be a computer host or a computer server. A network entity or network node may be a hardware unit, e.g. a computer server, a network device, a PC, a tablet, a smartphone, a router, a gateway or a whole computer network. A network entity or a network node may be a software unit, e.g. an application program or software module on a PC, tablet, smartphone or any other hardware device.

The communication systems, the communication server and the communication devices as described hereinafter may be implemented by various technologies, in particular utilizing communication networks based on mobile communication standards such as LTE, in particular LTE-A and/or OFDM and successor standards such as 5G or based on IEEE 802.11 networks such as WiFi. The communication devices described hereinafter may support voice and video communication, in particular Skype calls. The components and network nodes of such systems may be implemented as electronic devices or electronic network entities. The described devices and network entities may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

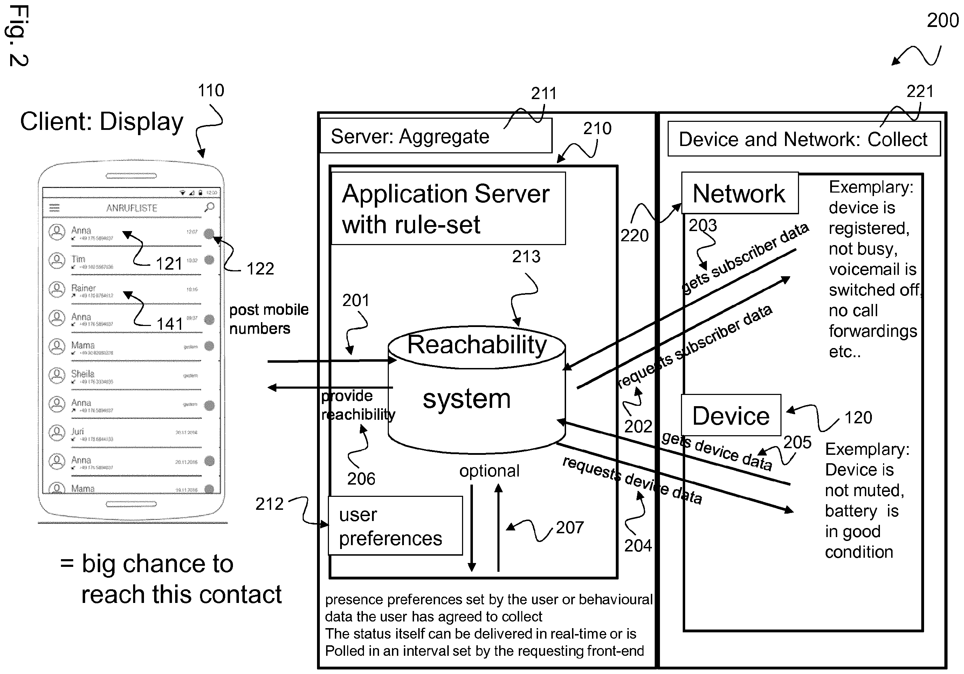

Fig. 2 shows a schematic diagram illustrating a communication system 200 with an application server including a reachability system according to the disclosure.

The A-Party 111 uses a first communication device 110, e.g. a smartphone or any other telephone, to initiate a communication with a B-Party, e.g. Anna 121, Tim 131 or Rainer 141. The A-Party 111 knows the telephone numbers of the respective B-Parties, e.g. from their call log or their address book stored in a memory of the first communication device 110. For example Anna 121 has the telephone number +49 176 5894037, Tim has the telephone number +49 160 5567036 and Rainer has the telephone number +49 170 8764012. A lot of other contacts may be stored in the address book or call log as shown in Fig. 2.

The communication system 200 includes a first communication device 110, an application server 210, a communication network 220 and a second communication device 120. The task of communication network 220 and second device 120 is to collect data 221, i.e. subscriber data by the network 220 and device data by the device 120. The task of the application server 210 is to aggregate 211 the collected data, e.g. by using a rule-set or a corresponding metric for processing the collected information. The network 220 may collect subscriber data, e.g. if device is registered, not busy, if voicemail is switched off or if no call forwardings are switched, etc. The device 120 may collect device data, e.g. if device is not muted, battery is in good condition, etc.

The application server 210 may aggregate this collected data and provide a reachability of the device 120 to the client device 110. The application server 210 includes a reachability system 213 which is configured to request subscriber data 202 and request device data 204 upon reception of a client request 201. The reachability system 213 applies a rule set to the received subscriber data 203 and device data 204 to provide the reachability of the B-Party device 120 to the A-Party device 110. The rule set or metric may be for example as follows: If device is registered, not busy, voicemail is switched off and no call forwardings switched on, reachability of B-Party device 120 is good, otherwise not good. If B-Party device 120 is not muted and battery is in good condition, reachability of B-Party device 120 is good, otherwise not good. If both of these conditions are fulfilled, i.e. for subscriber data 203 and device data 205, reachability of B-Party device 120 is very good, if only one of these conditions is fulfilled, reachability may be not sufficient to initiate a call.

Optionally, the reachability system 213 may evaluate user preferences 212, i.e. presence preferences set by the user of behavioural data the user has agreed to collect 207. The user preferences 212 may consider restrictions settable by the user on accessing private information of the user. The communication system 200 may support both voice calls and video calls.

The communication system 200 as shown in Fig. 2 allows the A-Party 111 to see in real time if a contact person, e.g. Anna 121, is currently reachable 122. The reachability status 122 of Anna 121 can be displayed on the client display, e.g. by a green reachability symbol. Such a reachability symbol can for example include a graphics section and/or a text section. When a contact person is currently not reachable, e.g. Rainer 141 in Fig. 2, no symbol or alternatively a red reachability symbol may be displayed on the client display of the first communication device 110.

Such a communication system 200 provides a solution to the A-party's demand: "I would like to know before a phone call whether I actually reach someone, if I call this person, that is, whether a conversation is possible at all." Using this communicaiton system 200, the A-subscriber 111 knows now before the call has been established, whether the caller is currently available. The A-subscriber 111 does not need to listen to the dial tone or listen to the busy signal, or listen to the message on the voicebox of the B-subsriber. Instead, the A-subscriber 111 can see by a simple symbol of his display if the B-subscriber is reachable. Furthermore, it is possible to know before the call set-up whether the available network quality of the B-subscriber is sufficient for a call.

The caller wants to communicate by phone, because this way is very direct and personal, he is in a hurry or needs feedback. In today's IP messaging era, the caller decides deliberately for telephony as a synchronous communication channel. The caller can check by the reachability symbol displayed on his display if the B-participant is reachable and then initiate a call to speak to him personally.

The reachability symbol indicates if the B subscriber can also accept the incoming call. In addition, the reachability symbol can indicate to the A-subscriber if the call can also be managed and terminated in the expected quality, since only then all messages may be transmitted.

Such a communication system 200 allows the caller / A-subscriber to receive information on the technical availability of the B-subscriber before the call. I.e. the caller is informed about the B-subscriber's ability to reach the B-subscriber from a technical point of view. The communication system 200 makes it possible to have an indication on the availability of the B-subscribers before the connection has been established. Inadequate voice quality or other problems such as empty batteries in wireless devices are indicated within the reachability status to the A-subscriber. Accessibility can be controlled by the application server 210 even without applying special features such as so-called voice performance features in the circuit-switched communication.

The communication system 200 can facilitate more and better telephony, since the availability of the desired conversation partner is transparent to the A-Party. Thus, the A-Party can directly call the B-Party instead of using e.g. asynchronous IP messaging. Telephony is easy to use; no other communication channels need to be chosen.

The communication system 200 enables the A-subscriber to obtain appropriate information even before the call and thus solves an existing telephony client problem and increases the effectiveness of the personal communication on the user side.

The reachability system 213 provides the following tasks: A) collecting data on availability and smartly aggregating the data, B) summarize the collected data to indicated the status of automatic technical availability; and C) distributing the data to third parties.

The advantage of the communication system 200 lies, on the one hand, in the user's time saving, a more positive perception of the telephone service and a more exact expectation during the connection setup.

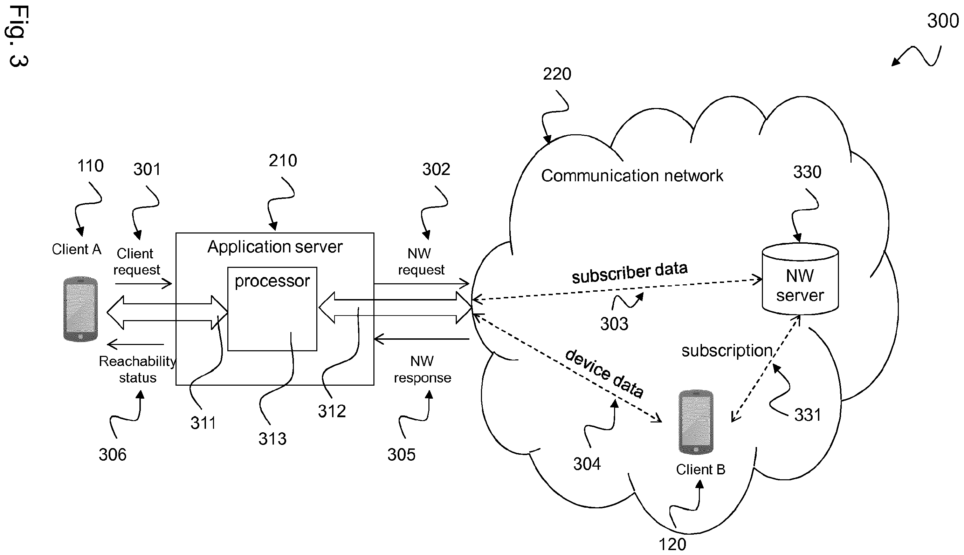

Fig. 3 shows a schematic diagram illustrating message flows in a communication system 300 with application server 210 providing a reachability status 306 of a second communication device 120 to a first communication device 110 according to an implementation form.

The application server 210 includes a client interface 311 with the first communication device 110; a network interface 312 with a communication network 220; and a processor 313. The application server 210 may correspond to the application server 210 described above with respect to Fig. 2. The communication network 220 may correspond to the network 220 described above with respect to Fig. 2. The second communication device 120 may correspond to the second device 120 described above with respect to Fig. 2. The first communication device 110, i.e. Client A, may correspond to the client device 110 described above with respect to Fig. 2.

The processor 313 is configured to: receive a client request 301 for a reachability status of the second communication device 120 via the client interface 311, transmit a network request 302 for at least one of subscriber data 303 and device data 304 of the second communication device 120 via the network interface 312 based on the client request 301, receive a network response 305 to the network request 302, wherein the network response 302 comprises the at least one of subscriber data 303 and device data 304 of the second communication device 120, determine a reachability status 306 of the second communication device 120 based on a metric with respect to the at least one of subscriber data 303 and device data 304 of the second communication device 120, and transmit the reachability status 306 of the second communication device 120 via the client interface 311 to the first communication device 110.

The second communication device 120 may be registered within the communication network 220. When registering to the network 220 subscription information 331 may be exchanged between Client B 120 and network 220 by using a network server 330, e.g. a HSS (Home Subscription Server). Subscription data 303 may be stored within a memory of the network server 330. Device data 304 may be acquired directly from the Client B 120. Alternatively, device data 304 may be provided by the Client B to the communication network 220 and requested by Client A 110 from the communication network.

The processor 313 may be configured to determine the reachability status 306 of the second communication device 120 before establishing a communication to the second communication device 120. The reachability status 306 may indicate a probability for a successful connection establishment with the second communication device 120.

The subscriber data 303 of the second communication device 120 may include information elements of at least one of the following items: device is registered in the communication network 220, device is not busy, voicemail is switched off, no call forwarding enabled, e.g. as described above with respect to Fig. 2. The device data 304 of the second communication device 120 may include information elements of at least one of the following items: device is not muted, battery load is above a predefined level, e.g. as described above with respect to Fig. 2.

The processor 313 may be configured to determine the metric based on weighting information elements comprised in the subscriber data 303 and information elements comprised in the device data 304. The metric may be a rule set, e.g. as described above with respect to Fig. 2.

The processor 313 may be configured to determine a call quality for a communication connection to the second communication device 120 over at least one communication channel and to determine the metric further based on the call quality. The processor 313 may be configured to determine the call quality based on at least one of an audio or video communication channel, e.g. as described above with respect to Fig. 2.

The processor 313 may be configured to determine the reachability status 306 based on a mapping of the metric to a probability value.

The application server 210 may include a memory configured to store user preference data and/or behavioural data settable by a user of the second communication device 120. The preference data may indicate a preferred connection to reach the user, e.g. by using voice or video or email, and the behavioural data may indicate data the user has agreed to collect. E.g. some private data may be restricted.

The processor 313 may be configured to determine the metric based on the preference data and/or the behavioural data stored in the memory.

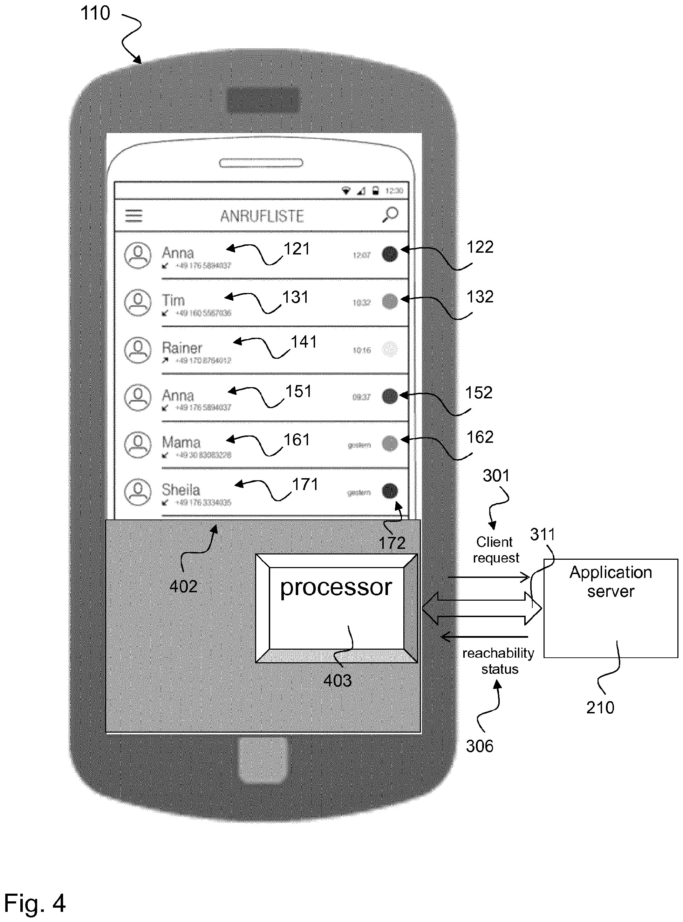

Fig. 4 shows a schematic diagram illustrating a communication device 110 providing a reachability status 306 of at least one second communication device 120. The first communication device 110 includes a client interface 311 with an application server 210, e.g. an application server 210 described above with respect to Figures 2 and 3; a display 402 for displaying a reachability status 306 of at least one second communication device 120; and a processor 403.

The processor 403 is configured to: transmit a client request 301 for a reachability status 306 of the at least one second communication device 120 via the client interface 311 to the application server 210, receive a server response to the client request 301, wherein the server response comprises the reachability status 210 of the at least one second communication device 120 based on a metric with respect to at least one of subscriber data 303 and device data 304 of the at least one second communication device 120, and display the reachability status 306 of the at least one second communication device 120 on the display 402.

The processor 403 may be configured to establish a communication to the at least one second communication device 120 based on the reachability status 306 of the at least one second communication device 120. The reachability status 306 may be determined by the application server 210, e.g. as described above with respect to Fig. 3.

The communication device 110 may include a memory storing a list of contact persons, e.g. contacts 121, 131, 141, 151, 161, 171 as described above with respect to Fig. 1, wherein each contact person from the list is associated with a respective subscriber identity (ID) of a second communication device of the at least one second communication devices 120. The processor 403 may be configured to display the reachability status 306 together with the respective aubscriber ID of the contact person 121, 131, 141, 151, 161, 171 associated with the at least one second communication device 120.

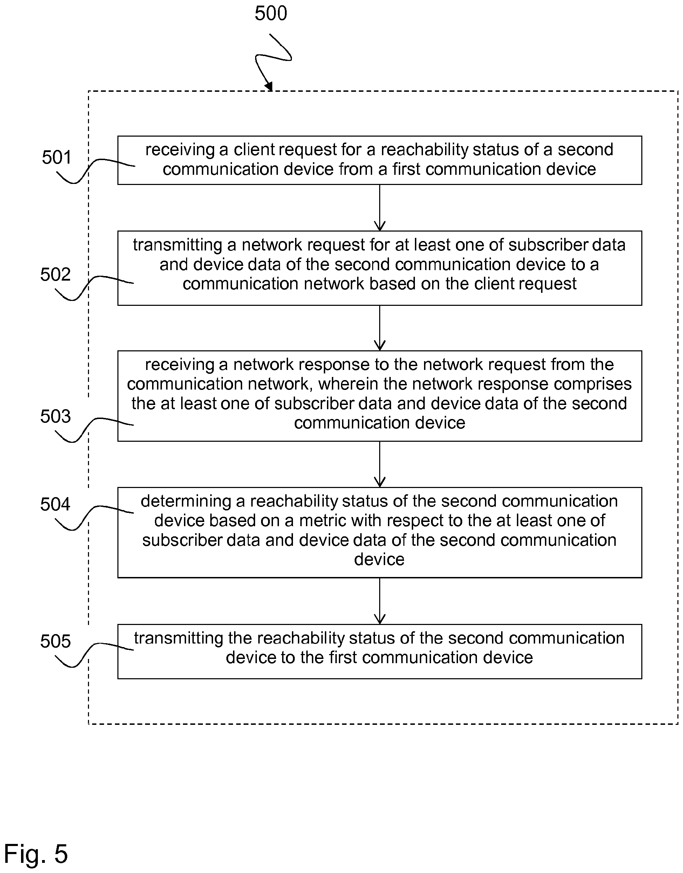

Fig. 5 shows a schematic diagram illustrating a method 500 for providing a reachability status 306 of a second communication device 120 to a first communication device 110. The method 500 includes receiving 501 a client request 301 for a reachability status 306 of a second communication device 120 from a first communication device 110, e.g. as described above with respect to Figs. 2 and 3. The method 500 includes transmitting 502 a network request 302 for at least one of subscriber data 303 and device data 304 of the second communication device 120 to a communication network 220 based on the client request 301, e.g. as described above with respect to Figs. 2 and 3. The method 500 includes receiving 503 a network response 305 to the network request 302 from the communication network 220, wherein the network response 305 comprises the at least one of subscriber data 303 and device data 304 of the second communication device 120, e.g. as described above with respect to Figs. 2 and 3. The method 500 includes determining 504 the reachability status 306 of the second communication device 120 based on a metric with respect to the at least one of subscriber data 303 and device data 304 of the second communication device 120, e.g. as described above with respect to Figs. 2 and 3. The method 500 includes transmitting 505 the reachability status 306 of the second communication device 120 to the first communication device 110, e.g. as described above with respect to Figs. 2 and 3.

The method 500 may be applied on an application server 210 described above with respect to Figs. 2 and 3.

The methods, systems and devices described herein may be implemented as electrical and/or optical circuit within a chip or an integrated circuit or an application specific integrated circuit (ASIC). The invention can be implemented in digital and/or analogue electronic and optical circuitry. The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The present disclosure also supports a computer program product including computer executable code or computer executable instructions that, when executed, causes at least one computer to execute the performing and computing steps described herein, in particular the method 500 as described above with respect to Fig. 5 and the techniques described above with respect to Figs. 2 to 4. Such a computer program product may include a readable non-transitory storage medium storing program code thereon for use by a computer. The program code may perform the method 500 and techniques as described above with respect to Figures 1 to 5.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An application server (210) for providing a reachability status of a second communication device (120) to a first communication device (110), the application server (210) comprising:
a client interface (311) with a first communication device (110);
a network interface (312) with a communication network (220);
a processor (313), configured to:
receive a client request (301) for a reachability status of a second communication device (120) via the client interface (311),
transmit a network request (302) for at least one of subscriber data (303) and device data (304) of the second communication device (120) via the network interface (312) based on the client request (301),
receive a network response (305) to the network request (302), wherein the network response (302) comprises the at least one of subscriber data (303) and device data (304) of the second communication device (120),
determine a reachability status (306) of the second communication device (120) based on a metric with respect to the at least one of subscriber data (303) and device data (304) of the second communication device (120), and
transmit the reachability status (306) of the second communication device (120) via the client interface (311) to the first communication device (110).

2. The application server (210) of claim 1,
wherein the processor (313) is configured to determine the reachability status (306) of the second communication device (120) before establishing a communication to the second communication device (120).

3. The application server (210) of claim 1 or 2,
wherein the reachability status (306) indicates a probability for a successful connection establishment with the second communication device (120).

4. The application server (210) of one of the preceding claims,
wherein the subscriber data (303) of the second communication device (120) comprises information elements of at least one of the following items: device is registered in the communication network (220), device is not busy, voicemail is switched off, no call forwarding enabled.

5. The application server (210) of one of the preceding claims,
wherein the device data (304) of the second communication device (120) comprises information elements of at least one of the following items: device is not muted, battery load is above a predefined level.

6. The application server (210) of one of the preceding claims,
wherein the processor (313) is configured to determine the metric based on weighting information elements comprised in the subscriber data (303) and information elements comprised in the device data (304).

7. The application server (210) of one of the preceding claims,
wherein the processor (313) is configured to determine a call quality for a communication connection to the second communication device (120) over at least one communication channel and to determine the metric further based on the call quality.

8. The application server (210) of claim 7,
wherein the processor (313) is configured to determine the call quality based on at least one of an audio or video communication channel.

9. The application server (210) of one of the preceding claims,
wherein the processor (313) is configured to determine the reachability status (306) based on a mapping of the metric to a probability value.

10. The application server (210) of one of the preceding claims, comprising:
a memory configured to store user preference data and/or behavioural data settable by a user of the second communication device (120),
wherein the preference data indicates a preferred connection to reach the user and the behavioural data indicates data the user has agreed to collect.

11. The application server (210) of claim 10,
wherein the processor (313) is configured to determine the metric based on the preference data and/or the behavioural data stored in the memory.

12. A first communication device (110) providing a reachability status (306) of at least one second communication device (120), the first communication device (110) comprising:
a client interface (311) with an application server (210), in particular an application server (210) according to one of claims 1 to 11;
a display (402) for displaying a reachability status (306) of at least one second communication device (120); and
a processor (403), configured to:
transmit a client request (301) for a reachability status (306) of the at least one second communication device (120) via the client interface (311) to the application server (210),
receive a server response to the client request (301), wherein the server response comprises the reachability status (210) of the at least one second communication device (120) based on a metric with respect to at least one of subscriber data (303) and device data (304) of the at least one second communication device (120), and
display the reachability status (306) of the at least one second communication device (120) on the display (402).

13. The first communication device (110) of claim 12,
wherein the processor (403) is configured to establish a communication to the at least one second communication device (120) based on the reachability status (306) of the at least one second communication device (120).

14. The first communication device (110) of claim 12 or 13, comprising:
a memory storing a list of contact persons (121, 131, 141, 151, 161, 171), wherein each contact person from the list is associated with a respective subscriber identity (ID) of a second communication device of the at least one second communication devices (120),
wherein the processor (403) is configured to display the reachability status (306) together with the respective aubscriber ID of the contact person (121, 131, 141, 151, 161, 171) associated with the at least one second communication device (120).

15. A method (500) for providing a reachability status (306) of a second communication device (120) to a first communication device (110), the method (500) comprising:
receiving (501) a client request (301) for a reachability status (306) of a second communication device (120) from a first communication device (110);
transmitting (502) a network request (302) for at least one of subscriber data (303) and device data (304) of the second communication device (120) to a communication network (220) based on the client request (301);
receiving (503) a network response (305) to the network request (302) from the communication network (220), wherein the network response (305) comprises the at least one of subscriber data (303) and device data (304) of the second communication device (120);
determining (504) the reachability status (306) of the second communication device (120) based on a metric with respect to the at least one of subscriber data (303) and device data (304) of the second communication device (120); and
transmitting (505) the reachability status (306) of the second communication device (120) to the first communication device (110).

## Amended claims

### Amended claims in accordance with Rule 137(2) EPC.

1. An application server (210) for providing a reachability status of a second communication device (120) to a first communication device (110), the application server (210) comprising:
a client interface (311) with a first communication device (110);
a network interface (312) with a communication network (220);
a processor (313), configured to:
receive a client request (301) for a reachability status of a second communication device (120) via the client interface (311),
transmit a network request (302) for at least one of subscriber data (303) and device data (304) of the second communication device (120) via the network interface (312) based on the client request (301),
receive a network response (305) to the network request (302), wherein the network response (302) comprises the at least one of subscriber data (303) and device data (304) of the second communication device (120),
wherein the subscriber data (303) is received from a network server (330) of the communication network (220) while the device data (304) is acquired directly from the second communication device (120),
determine a reachability status (306) of the second communication device (120) based on a metric with respect to the at least one of subscriber data (303) and device data (304) of the second communication device (120), and
transmit the reachability status (306) of the second communication device (120) via the client interface (311) to the first communication device (110).

2. The application server (210) of claim 1,
wherein the processor (313) is configured to determine the reachability status (306) of the second communication device (120) before establishing a communication to the second communication device (120).

3. The application server (210) of claim 1 or 2,
wherein the reachability status (306) indicates a probability for a successful connection establishment with the second communication device (120).

4. The application server (210) of one of the preceding claims,
wherein the subscriber data (303) of the second communication device (120) comprises information elements of at least one of the following items: device is registered in the communication network (220), device is not busy, voicemail is switched off, no call forwarding enabled.

5. The application server (210) of one of the preceding claims,
wherein the device data (304) of the second communication device (120) comprises information elements of at least one of the following items: device is not muted, battery load is above a predefined level.

6. The application server (210) of one of the preceding claims,
wherein the processor (313) is configured to determine the metric based on weighting information elements comprised in the subscriber data (303) and information elements comprised in the device data (304).

7. The application server (210) of one of the preceding claims,
wherein the processor (313) is configured to determine a call quality for a communication connection to the second communication device (120) over at least one communication channel and to determine the metric further based on the call quality.

8. The application server (210) of claim 7,
wherein the processor (313) is configured to determine the call quality based on at least one of an audio or video communication channel.

9. The application server (210) of one of the preceding claims,
wherein the processor (313) is configured to determine the reachability status (306) based on a mapping of the metric to a probability value.

10. The application server (210) of one of the preceding claims, comprising:
a memory configured to store user preference data and/or behavioural data settable by a user of the second communication device (120),
wherein the preference data indicates a preferred connection to reach the user and the behavioural data indicates data the user has agreed to collect.

11. The application server (210) of claim 10,
wherein the processor (313) is configured to determine the metric based on the preference data and/or the behavioural data stored in the memory.

12. A communication system (200, 300), comprising:
An application server (210) according to one of the preceding claims; and
a first communication device (110) providing a reachability status (306) of at least one second communication device (120), the first communication device (110) comprising:
a client interface (311) with an application server (210), in particular an application server (210) according to one of claims 1 to 11;
a display (402) for displaying a reachability status (306) of at least one second communication device (120); and
a processor (403), configured to:
transmit a client request (301) for a reachability status (306) of the at least one second communication device (120) via the client interface (311) to the application server (210),
receive a server response to the client request (301), wherein the server response comprises the reachability status (210) of the at least one second communication device (120), and
display the reachability status (306) of the at least one second communication device (120) on the display (402).

13. The communication system (200, 300) of claim 12,
wherein the processor (403) is configured to establish a communication to the at least one second communication device (120) based on the reachability status (306) of the at least one second communication device (120).

14. The communication system (200, 300) of claim 12 or 13, comprising:
a memory storing a list of contact persons (121, 131, 141, 151, 161, 171), wherein each contact person from the list is associated with a respective subscriber identity (ID) of a second communication device of the at least one second communication devices (120),
wherein the processor (403) is configured to display the reachability status (306) together with the respective aubscriber ID of the contact person (121, 131, 141, 151, 161, 171) associated with the at least one second communication device (120).

15. A method (500) for providing a reachability status (306) of a second communication device (120) to a first communication device (110), the method (500) comprising:
receiving (501) a client request (301) for a reachability status (306) of a second communication device (120) from a first communication device (110);
transmitting (502) a network request (302) for at least one of subscriber data (303) and device data (304) of the second communication device (120) to a communication network (220) based on the client request (301);
receiving (503) a network response (305) to the network request (302) from the communication network (220), wherein the network response (305) comprises the at least one of subscriber data (303) and device data (304) of the second communication device (120),
wherein the subscriber data (303) is received from a network server (330) of the communication network (220) while the device data (304) is acquired directly from the second communication device (120);
determining (504) the reachability status (306) of the second communication device (120) based on a metric with respect to the at least one of subscriber data (303) and device data (304) of the second communication device (120); and
transmitting (505) the reachability status (306) of the second communication device (120) to the first communication device (110).
